# EUROPEAN PATENT SPECIFICATION

(11) **EP 3 067 103 B1**
(45) Date of publication and mention of the grant of the patent: **13.12.2017**
(21) Application number: 15382107.9
(22) Date of filing: 11.03.2015
(51) Int. Cl.: B01D 17/02, B01D 17/04, C02F 1/40

(54) **SKIMMER WITH A SYSTEM FOR THE RECOVERY OF HYDROCARBONS SPILLED INTO WATER**
SKIMMER MIT EINEM SYSTEM ZUR RÜCKGEWINNUNG VON IN WASSER GESCHÜTTETEN KOHLENWASSERSTOFFEN
SKIMMER AVEC SYSTÈME POUR LA RÉCUPÉRATION D'HYDROCARBONES DÉVERSÉS DANS DE L'EAU

(43) Date of publication of application: 14.09.2016
(73) Proprietor: Altarriba Checa, Juan Maria, 50001 Zaragoza (ES)
(72) Inventor: Altarriba Checa, Juan Maria, 50001 Zaragoza (ES)
(74) Representative: Lahidalga de Careaga, Jose Luis

(56) References cited:
- WO-A1-2014/135420
- DE-A1- 4 400 909
- DE-A1-102005 018 760
- US-A- 3 052 358
- US-A- 3 746 173
- US-A- 5 622 621
- US-A- 6 056 054
- US-A1- 2014 251 145

## Description

### OBJECT OF THE INVENTION

The following invention, as expressed in the title of this specification, refers to a skimmer including a system for the recovery of hydrocarbons spilled into water, which system aims to minimize the amount of water in the recovered spill and simplify subsequent purification processes, leading to an increased recovery capacity and reduced environmental impact.

The system is integrated into any type of skimmer (especially overflow hole, brush, mechanical skimmers) and immediately after the recovery phase but before the pumping process towards a temporary reservoir.

Also, the skimmer and the system can be integrated both in existing and new equipment, as well as in oil separators and separating systems integrated in industrial processes, so that the interested industries and emergency and rescue teams will be able to increase efficiency by up to 50% in bad weather.

The system will be able to separate the water recovered with the spill, by pumping hydrocarbons and emulsions only. Thus, the equipment will pump hydrocarbons and emulsions but not water, since, as it is known, the recovered substance is a mixture of hydrocarbons, water in oil emulsions, and water, so that recovery teams will optimize the use of temporal reservoirs and water/oil separators.

### TECHNICAL FIELD

In the present patent specification a system for the recovery of hydrocarbons spilled into water, and especially oil spills at sea is described.

### BACKGROUND OF THE INVENTION

As it is well known, hydrocarbon spills at sea produce a significant environmental impact affecting the ecosystem and the species that inhabit the marine environment in such a way that, depending on the type of spill, the affected sediment and the time of the year in which reproductive cycles and migration occur, the consequences may be fatal.

Furthermore, the recovery of spills at sea is not easy even if they are concentrated by means of containment booms, designed for this, and even with the aid of a wide variety of systems available in the market for it.

These recovery systems, known as skimmers, are also subject to wave conditions, so that in the case of high waves their efficiency is considerably reduced.

Basically, the skimmers have a spill recovery means, a buoyant means to keep it on the water surface and a pumping means, which transports the recovered spills to a reservoir, with the possibility of having separator, means to separate water from the recovered spill and optimizing the collection reservoirs.

On the other hand, spill recovery may be carried out by suction means, which make the spill include large amounts of water, or by selective means, which allow reducing the amount of water.

In short, the low efficiency in some types of existing skimmers and the widespread tendency of a decrease in their performance in rough sea conditions cause a major problem during recovery of the spilled hydrocarbon, since a large amount of water is recovered together with the spilled hydrocarbon.

Since the storage capacity in rescue and cleaning vessels that are displaced to areas affected by the oil spill is not unlimited, the large amount of water recovered together with the spilled hydrocarbon pose a problem that requires the completion of intermediate highly efficient decanting, filtration and separation processes.

Thus, for example, according to the MARPOL 73/78 convention, the maximum concentration of hydrocarbon in the bilge water before returning it to the sea should be 15 ppm., so that the water separation processes are time-consuming and energy costly, and in most cases can not be performed on the spill site, but in ground-based installations.

US 5 622 621 discloses a rotating fluid separator.

### SUMMARY OF THE INVENTION

The system object of the invention aims to minimize the amount of water in the spill recovered, simplify subsequent purification processes and reduce environmental impact, by thus increasing the recovery capacity of existing systems, and integrating the system into any (overflow hole, brush, mechanical) skimmer type immediately after the recovery phase of the process and before pumping to a temporary reservoir, so that the system comprises all the features of independent claim 1. In a variant of mode for carrying out the invention, the separating chamber can incorporate coalescing cones.

Water, which has been separated from the hydrocarbon, goes up from the separating chamber, at the outer part thereof, towards the exit, so that if the separating chamber includes coalescing cones, water will go up on the exterior part thereof.

On the other hand, hydrocarbon separated from the water goes up from the separating chamber, in proximity to the central tube or through the coalescence cones towards the sealing disc, through the pressure or positive displacement pumping chamber towards the hydrocarbon outlet.

The system is integrated either in existing or new skimmers, in oil separators and separating systems integrated in industrial processes, so that the interested industries and emergency and rescue teams will be able to increase efficiency by up to 50% in bad weather.

The system will be able to separate the recovered water mixed with oil and emulsions by pumping the latter only. Thus, the skimmer will pump hydrocarbons and emulsions but not water, so that the recovered substance is a mixture of hydrocarbons, water in oil emulsions and water and, therefore, the recovery teams will optimize the use of temporary reservoirs and water/oil separators.

In order to complement the description that is going to be carried out and with the purpose of facilitating the understanding of the characteristics of the invention, the present specification is accompanied by a set of drawings wherein their figures represent, by way of a non-limiting example, the most characteristic features of the invention:

### BRIEF DESCRIPTION OF THE DRAWINGS

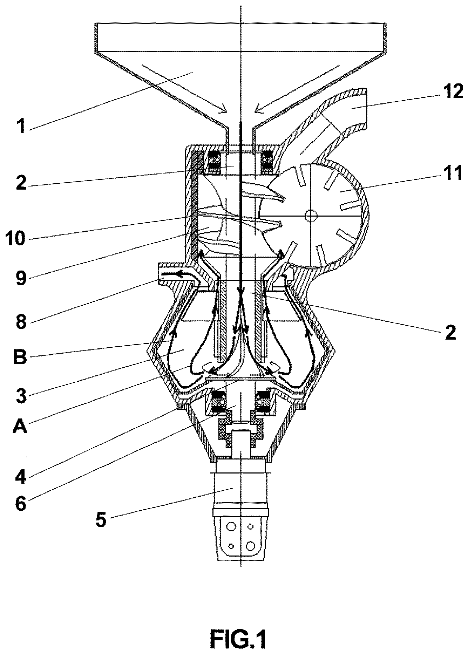

Figure 1 shows a sectional view of the system, where the inlet of the recovered spill from the corresponding skimmer can be seen, as well as the path of the recovered spilled substance and of the water and the hydrocarbon once they have been separated, wherein the separating chamber lacks coalescing cones and the pressure or positive displacement pumping chamber is defined by an Archimedean screw.

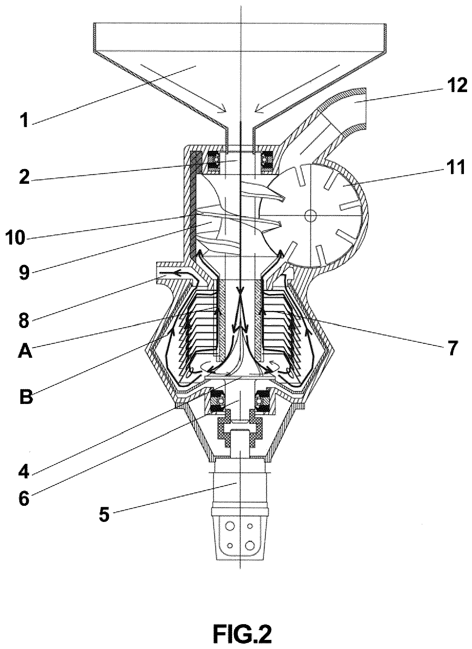

Figure 2 shows a sectional view of the system, where the inlet of the recovered spill from the corresponding skimmer can be seen, as well as the path of the recovered spilled substance and of the water and the hydrocarbon once they have been separated, wherein the separating chamber comprises coalescing cones and the pressure or positive displacement pumping chamber is defined by an Archimedean screw.

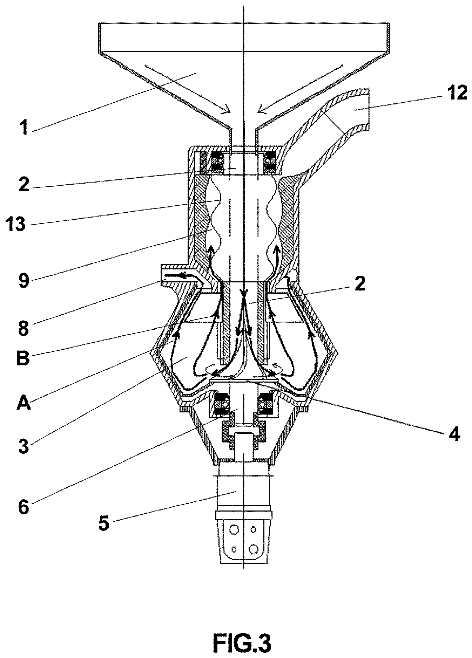

Figure 3 shows a sectional view of a non-claimed system, where the inlet of the recovered spill from the corresponding skimmer can be seen, as well as the path of the recovered spilled substance and of the water and the hydrocarbon once they have been separated, wherein the separating chamber lacks coalescing cones and the pressure or positive displacement pumping chamber is defined by a helical screw.

### DESCRIPTION OF A PREFERRED MODE FOR CARRYING OUT THE INVENTION

In view of the reported figures, and in accordance with the adopted numbering, we can observe that the system is based on the application of centrifugal and, in turn, coalescent separation technology, so that the recovered spill enters the system from an overflow hole skimmer or through an intermediate reservoir after the scraper/comb in the brush skimmer, and is spun at high speed in order to cause the separation of the different components according to their density. Logically, the system can be installed in horizontal or vertical position.

Thus, the recovered spill goes through the inlet 1 towards the central tube 2 and is led to the separating chamber 3 where it flows onto a rotating element 4 by transmitting a rotary movement to it in order to cause the separation according to the density of water, oil and emulsions.

Thus, the spill is spun by means of a motor 5 and a coupling 6 associated with the rotating element 4 and due to the difference in density, liquids and recovered small solid particles follow different paths through the centrifugal force.

In this way, water moves toward the outer perimeter of the separating chamber 3 and hydrocarbons, of lower density than water, take the central part and go up through gravity.

According to a variant of mode of carrying out the invention, coalescence cones 7 can be incorporated in the separating chamber 3, which help to bring together the hydrocarbon droplets by allowing them to go up faster and thus the separation of the hydrocarbon from water is carried out in a more effective manner.

In this way, the assembly consisting of the central tube 2, acting as a shaft, the rotating element 4 and the separating chamber 3, and when applicable, the coalescing cones 7, rotates jointly operated by the motor 5, which transmits movement through the coupling 6, wherein said motor 5 can be hydraulic, pneumatic, electric or of any other type. Small solids, if any, will be pushed towards the perimeter walls and down by the simultaneous effect of gravity and centrifugal force.

Once separated, water and hydrocarbons follow different paths, and thus, the water, even with rotational movement, may exit the system naturally or with the help of a static pump that will force it towards the exterior water outlet 8.

On the other hand, hydrocarbons will be led to the pressure or pumping chamber 9, which is based on a positive displacement pump of the type of an axially bored Archimedean screw 10 (replaced by a helical screw 13 in the non-claimed embodiment of Figure 3) to allow the passage of the recovered spills through the central tube 2 that is associated with them.

In addition, the pressure or positive displacement pumping chamber 9 is associated with a sealing disc 11 to which hydrocarbons, already separated from the water, are led to be evacuated through the hydrocarbon outlet 12, in such a way that it confines the hydrocarbon already separated from the water inside the pump to allow the pressure increase thereof.

In the figures of the designs, the path followed by the water and the hydrocarbons once separated in the separating chamber 3 can be seen, and it can be appreciated how the water on the outside of its inner surface (path B) is led to the water outlet 8, while hydrocarbons are led through its central part or the coalescing cones 7 (path A) to the sealing disk 12 associated with the pressure or pumping chamber 9 or to the pressure or pumping camera 9 itself.

Ultimately, the combination of the technologies of centrifugal separation and coalescence of hydrocarbons and water and the pumping of the first through positive displacement pumping, necessary for pumping viscous fluids, such as hydrocarbons at low temperature, in a single system is quite new, and the use of both technologies increase the effectiveness of the systems for the recovery of spilled hydrocarbons.

## Claims

1. A skimmer including a system for the recovery of hydrocarbons spilled into water, which is integrated into the skimmer, the system comprising:
a central tube (2) into which the spill recovered by a skimmer enters;
a separating chamber (3) into which the central tube (2) leads;
a rotating element (4) located in the separating chamber (3) onto which the recovered spills falls to which a rotary motion is transmitted to separate the water;
means for transmitting the rotary motion to the rotating element consisting of a motor (5) and a coupling (6) with the corresponding bearings and retainers;
a pressure and positive displacement pumping chamber (9) based on an axially bored Archimedean screw (10) associated with the central tube (2) into which the recovered spill enters and with a sealing disc (11) that confines the hydrocarbon separated from the water coming from the separating chamber (3) ;
a rotating assembly defined by the means for transmitting the rotary motion to the rotating element, the separating chamber (3), the central tube (2) and the pressure or positive displacement pumping chamber (9) an hydrocarbon; outlet (12), and;
a water outlet (8).

2. The system for the recovery of hydrocarbons spilled into water, according to claim 1, **characterized in that** it comprises coalescing cones (7) in the separating chamber (3).

3. The system for the recovery of hydrocarbons spilled into water, according to claim 1,**characterized in that** the water, separated from hydrocarbon, goes up from the separating chamber (3) at the outermost surface thereof towards the water outlet (8).

4. The system for the recovery of hydrocarbons spilled into water, according to claim 1,**characterized in that** hydrocarbon, from which water has been separated, goes up from the separating chamber (3) at the central part thereof, near the central tube (2), towards the pressure or positive displacement pumping chamber (9), towards the hydrocarbon outlet (12).

5. The system for the recovery of hydrocarbons spilled into water, according to claims 1 to 4 and 2,**characterized in that** hydrocarbon goes up from the separating chamber (3) through the coalescing cones (7) reaching the sealing disc (11) where it is confined, already separated from the water, thus increasing the pressure thereof at the hydrocarbon outlet (12).

## Patentansprüche

1. Eine Abschöpfvorrichtung, die
ein in die Abschöpfvorrichtung integriertes Wiedergewinnungssystem für im Wasser vergossene Kohlenwasserstoffe enthält.
Das System enthält:
ein zentrales Rohr (2), in das die durch die Abschöpfvorrichtung zurückgewonnenen vergossenen Elemente einlaufen,
eine Trennkammer (3), in die das zentrale Rohr (2) führt,
ein Rotationselement (4), das sich in der Trennkammer (3) befindet, in die die zurückgewonnenen Elemente fallen. Auf das Rotationselement (4) wird eine Drehbewegung zur Trennung des Wassers übertragen.
Hilfsmittel für die Übertragung der Drehbewegung auf das Rotationselement, bestehend aus einem Motor (5) und einer Kupplung (6) mit den entsprechenden Lagerungen und Halteringen.
Eine Kammer (9) für die Druck- und Verdrängungspumpe, basierend auf einer axialdurchbohrten archimedischen Schraube (10), die mit dem zentralen Rohr (2) verbunden ist, in das die zurückgewonnenen vergossenen Elemente fallen und mit einer Dichtscheibe (11), durch die die vom Wasser getrennten aus der Trennkammer (3) kommenden Kohlenwasserstoffe begrenzt werden,
eine von den Hilfsmitteln für die Übertragung der Drehbewegung auf das Rotationselement begrenzte rotierende Einheit, die Trennkammer (3),
das zentrale Rohr (2) und die Kammer (9) für die Druck- und Verdrängungspumpe
ein Kohlenwasserstoffventil (12) und ein Wasseraustritt (8).

2. Die Abschöpfvorrichtung für im Wasser vergossene Kohlenwasserstoffe gemäß des ersten Patentanspruchs, ist **dadurch gekennzeichnet, dass** sie aus zusammengefügten Kegeln (7) in der Trennkammer (3) besteht.

3. Die Abschöpfvorrichtung für im Wasser vergossene Kohlenwasserstoffe gemäß des ersten Patentanspruchs, ist **dadurch gekennzeichnet, dass** das von den Kohlenwasserstoffen getrennte Wasser von der Trennkammer (3) zur äußeren Oberfläche und von dort hin zum Wasseraustritt (8) aufsteigt.

4. Die Abschöpfvorrichtung für im Wasser vergossene Kohlenwasserstoffe gemäß des ersten Patentanspruchs, ist **dadurch gekennzeichnet, dass** der Kohlenwasserstoff, von dem das Wasser getrennt wurde, von der Mitte der Trennkammer (3), in der Nähe des zentralen Rohrs (2) zur Kammer (9) für die Druck- und Verdrängungspumpe hin zum Kohlenwasserstoffventil (12) aufsteigt.

5. Die Abschöpfvorrichtung für im Wasser vergossene Kohlenwasserstoffe gemäß der Patentansprüche 1 bis 4 und 2, ist **dadurch gekennzeichnet, dass** der Kohlenwasserstoff von der Trennkammer (3) durch die zusammengefügten Kegel (7) aufsteigt und die Dichtscheibe (11) erreicht, wo er, bereits vom Wasser getrennt, begrenzt wird und damit der Druck auf das Kohlenwasserstoffventil (12) ansteigt.

## Revendications

1. Un skimmer comprenant un
système de récupération d'hydrocarbures déversés dans l'eau, intégré dans le skimmer, le système comprenant :
un tube central (2) dans lequel pénètre le déversement récupéré par un skimmer ; une chambre de séparation (3) dans laquelle débouche le tube central (2) ;
un élément rotatif (4) situé dans la chambre de séparation (3) sur lequel tombe les déversements récupérés et auquel un mouvement rotatif est transmis afin de séparer l'eau ;
des moyens pour transmettre le mouvement rotatif à l'élément rotatif constitué d'un moteur (5) et d'un accouplement (6) avec les paliers et les dispositifs de retenue correspondants ;
une chambre de pompage à pression et déplacement positif (9) basée sur une vis d'Archimède (10) à alésage axial associée au tube central (2) dans lequel pénètre le déversement récupéré et à un disque d'étanchéité (11) confinant les hydrocarbures séparés de l'eau provenant de la chambre de séparation (3) ;
un ensemble rotatif défini par les moyens permettant de transmettre le mouvement rotatif à l'élément rotatif, à la chambre de séparation (3), au tube central (2) et à la chambre de pompage à pression ou à déplacement positif (9)
une sortie pour les hydrocarbures (12) et une sortie d'eau (8).

2. Le système de récupération des hydrocarbures déversés dans l'eau, selon la revendication 1, **caractérisé en ce qu'**il comprend des cônes de coalescence (7) dans la chambre de séparation (3).

3. Le système de récupération des hydrocarbures déversés dans l'eau, selon la revendication, **caractérisé en ce que** l'eau, séparée des hydrocarbures, remonte de la chambre de séparation (3) à la surface la plus extérieure vers la sortie d'eau (8).

4. Le système de récupération des hydrocarbures déversés dans l'eau, selon la revendication 1, **caractérisé en ce que** les hydrocarbures dont l'eau a été séparée remontent de la chambre de séparation (3) au niveau de sa partie centrale, à proximité du tube central (2), vers la chambre de pompage à pression ou à déplacement positif (9), et vers la sortie des hydrocarbures (12).

5. Le système de récupération des hydrocarbures déversés dans l'eau, selon les revendications 1 à 4 et 2, **caractérisé en ce que** les hydrocarbures remontent de la chambre de séparation (3) à travers les cônes de coalescence (7), atteignant le disque d'étanchéité (11) où ils sont confinés, déjà séparés de l'eau, augmentant ainsi leur pression au niveau de la sortie des hydrocarbures (12).
